# EUROPEAN PATENT SPECIFICATION

(11) **EP 0 289 296 B1**
(45) Date of publication and mention of the grant of the patent: **13.07.1994**
(21) Application number: 88303824.2
(22) Date of filing: 28.04.1988
(51) Int. Cl.: G09B 19/00

(54) **Computer-based training for telephone extension users**
Training mittels Computer für Telefonanschlussbenutzer
Entraînement par ordinateur d'utilisateurs de systèmes d'extensions téléphoniques

(30) Priority: 29.04.1987 GB 8710190
(43) Date of publication of application: 02.11.1988
(73) Proprietor: TELECOM POTENTIAL GROUP PLC, Clevedon Avon BS21 7RQ (GB)
(72) Inventor: McCarthy, Peter John, Clevedon Avon BS21 6ED (GB); Littler, John Samuel, Henleaze Bristol BS9 4SA (GB); Makepiece, Anthony P.W., Wraxhall Bristol BS19 1JJ (GB)
(74) Representative: O'Connell, David Christopher

(56) References cited:
- EP-A- 0 044 642
- GB-A- 2 158 327
- US-A- 4 267 646
- BELL LABS RECORD, vol. 59, no. 7, September 1981, pages 213-216, Murray Hill, US; G.F. BARRETT Jr. et al.: "Programmable simulator speeds operator training"
- ELECTRICAL COMMUNICATION, vol. 60, no. 1, 1986, pages 71-78, ITT Corp., Harlow, Essex, GB; M. Immendörfer: "Applications for speech processing in telecommunication and office equipment"

## Description

The present invention relates to apparatus for use in a system for computer-based training of telephone extension users.

At present, anyone installing a new electronic telephone system (PABX) usually has the benefit of trainers provided by the suppliers of the PABX, who normally hold sessions on the individual features and facilities available on the system concerned. While these sessions generally cover the features and facilities on the PABX using telephones connected temporarily to the PABX, this method of training has a number of drawbacks. For example:-

People need to experiment with the new system in a non-threatening environment, without criticism from their peers or subordinate groups. If this does not happen, basic facts may be forgotten or the benefits of particular features of the system may not be appreciated.

There is a need to have application oriented training. At the moment, most people have standard training sessions which teach the features and facilities without addressing their particular problems.

There is a limited amount of time to absorb a lot of detail, as PABX suppliers only allow a relatively short period for the training of extension users.

Once a system is installed, the training of new members of staff tends to be difficult. If outside trainers have to come in, the cost of training becomes prohibitively expensive. On the other hand, using internal resources, e.g. a switchboard operator or other members of staff, disrupts their normal workload and relies on them having the skills and knowledge of a professional trainer.

The net result of these deficiencies, and, of course, the inability of the trainer to give one-to-one tuition for any sustained length of time, is poor usage of the facilities on what is a new and very expensive PABX. Users, with inadequate training, are effectively being asked to interrogate and program a computer albeit, certainly in computer terms, in a fairly simplistic way.

The present invention seeks to overcome the disadvantages of the known systems by providing apparatus for use in a training system which:-
allows experimentation or failure without fear of criticism and in a non-threatening environment;
allows people to control the pace of learning and take their own time to absorb the PABX features and facilities;
gives the trainee appropriate feedback, such as user friendly error messages or helpful hints which can be used by the trainee to correct his behaviour, in the event of an incorrect response or the failure to perform the necessary functions;
allows an element of fun to creep into the training programme by tailoring the software accordingly, and rewards success with expressions of congratulations;
gives complete flexibility in the timing and content of training; and
enables the telephone equipment to be used for training during induction courses or at any other time after the installation of the PABX.

In known training systems, induction training on telephones has not been carried out, because either individual trainers or telephone supervisors or telecommunication managers have not been able to spare the time to teach new members of staff the rudiments of using the PABX to the full.

A telephone training system is known from US-A-4 267 646, for example.

According to the present invention as characterized by claim 1, there is provided an apparatus for training telephone users in the use of a telephone connected to a telephone system, the apparatus comprising:
a processor provided with a stored training program;
interface means for connection to a telephone and to the processor; and
output means for providing messages, supplied by the training program, to a user of the apparatus,
CHARACTERISED IN THAT the interface means comprises a socket, to which a conventional telephone may be connected,
IN THAT the output means comprises a speech synthesiser, connected to the processor and the interface means, for generating electrical signals under the control of the processor which can be converted to spoken messages by a telephone connected to the socket of the interface means, and
IN THAT the processor is programmed such that, for training purposes, the apparatus can simulate operation of a telephone system, in that the user may operate a telephone connected to the interface means and receive from the apparatus via the output means responses corresponding to those which would be received from a telephone system, without requiring connection to such a system.

Preferably, the processor is a microcomputer.

In preferred embodiments of the invention, the output means may comprise either or both of the following:
a visual display means, for providing visual messages to the user;
a tone synthesiser, for imitating the audible signals provided by a telephone.

When the apparatus comprises a tone synthesiser, then, preferably, the output therefrom and from the speech synthesiser may be provided to the user either by means of the telephone operated by the user, or by means of a loudspeaker.

In preferred embodiments of the invention, the apparatus also includes an input means, connected directly to the processor, allowing the user to respond to messages provided by the output means.

For a better understanding of the present invention, and to show how it may be brought into effect, reference will now be made, by way of example, to the accompanying drawings, in which:-
Figure 1 is a schematic diagram of apparatus according to one embodiment of the present invention;
Figure 2 is a more detailed schematic illustration of the interface means which forms part of the apparatus shown in Figure 1;
Figure 3 is a schematic diagram showing the relationships between sections of the system software used in the programmed apparatus; and
Figures 4 and 5 are flow diagrams of typical training software which may be used with apparatus according to the present invention.

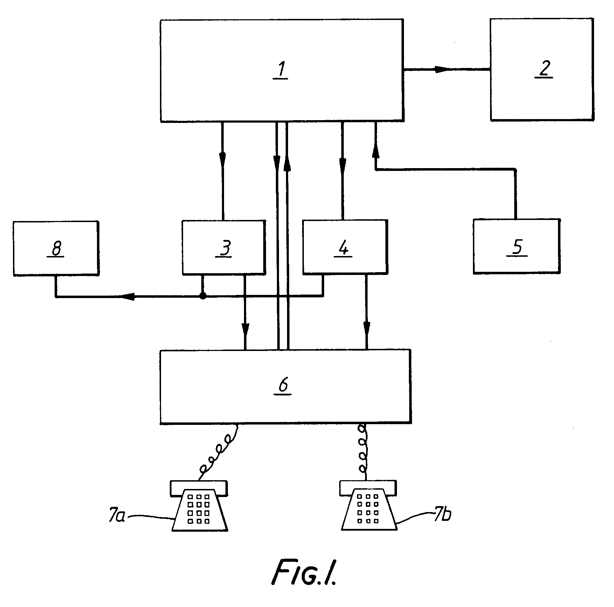

The embodiment of the present invention represented in Figure 1 comprises a number of system components, whose interconnections are shown by lines on the drawing, the arrows on those lines illustrating the flow of data or control signals along the interconnections.

The illustrated apparatus comprises a processor 1, which may be any standard commercially available microcomputer, such as a BBC model from ACorn Computers, or any comparable machine capable of being connected to, and of controlling, the other units.

Receiving signals from the processor 1 is a Visual Display Unit (VDU) 2. The VDU is capable of displaying both text and diagrams, in colour or monochrome, under control of the computer. It displays material drawn by the computer, but may also be able to display graphical material from other sources.

A speech synthesis module 3 is also connected to, and under the control of, the computer, as is a tone synthesis module 4, which generates signals which imitate the various call progress signals heard through a telephone (e.g. ringing, number unobtainable).

The apparatus also comprises a response module 5 with two or more buttons for the trainee to use to input, directly to the processor, responses to questions or instructions given by the system.

Interconnecting the processor 1 and the speech and tone synthesisers 3,4 is an interface module 6, to which are also connected two standard electronic telephone handset units 7a, 7b, with earth recall facilities and tone dialling.

The interface module 6 enables the computer to detect the signals coming from the telephone units 7a, 7b, to insert signals into the voice and ringing circuits of the telephones, and to switch on or off the voice signals to and from each telephone, and from the speech and tone synthesis modules 3, 4. The interface module 6 is connected to one or more standard peripheral ports of the computer 1, and also to the outputs of the speech and tone synthesisers 3, 4.

The telephone units 7a, 7b are connected to the interface module by standard slave telephone jacks.

Finally, the apparatus comprises a loudspeaker 8, which converts speech signals from the speech synthesiser 3, and tone signals from the tone signal synthesiser 4, into audible outputs.

The voice and tone synthesisers 3,4 the loudspeaker 8, and visual display unit 2 may be built into the computer 1, depending on the availability and means of connection of units for the computer chosen, and the interface module may also be housed within the computer cabinet, although it is not a standard unit, but is specifically devised for this application.

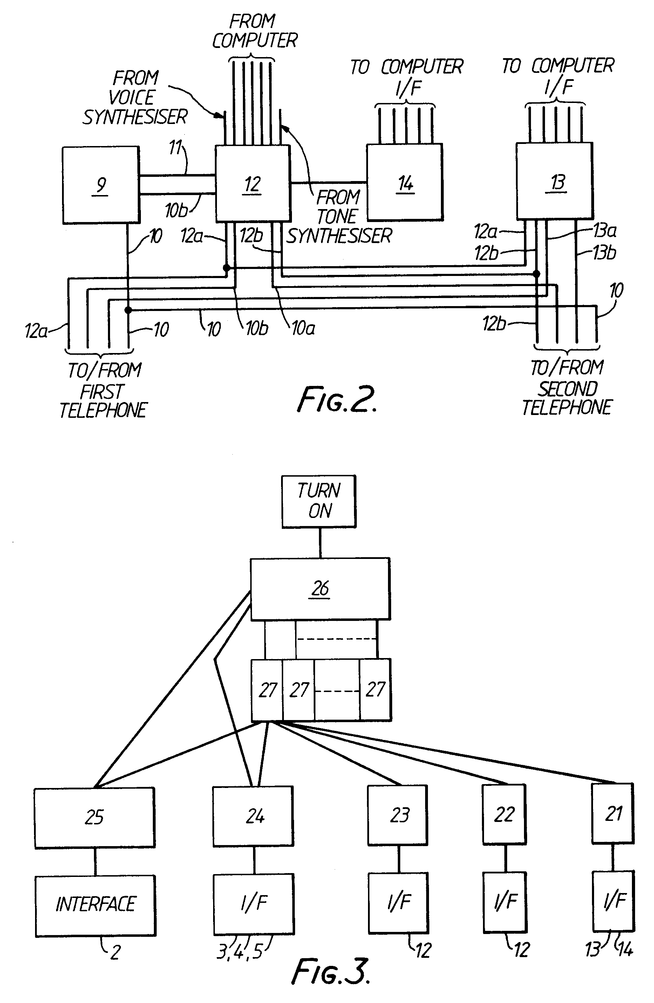

An important component of the apparatus is the interface module 6, which is illustrated schematically in Figure 2. The module consists of a power supply 9, to provide operating voltages, on line 10 for the standard telephone units, e.g. 24V DC for normal operation, and 24V AC on lines 10a,10b to operate the "bells". 5V DC is also supplied on line 11 to operate the logic circuits.

The interconnection of the speech paths, and the provision of ringing voltage to each telephone, is controlled by a relay module 12, under program control from the computer.

The detection of the state of each telephone 7a, 7b, for example, whether it is on or off the hook or whether the recall button is in operation, is achieved in module 13 by the detection of the current flowing in the earth return 13a,13b or one side of the voice circuit 12a,12b of the appropriate instrument. A series resistor develops a potential which is limited and fed to CMOS logic circuitry. The state of each telephone is then represented by a pair of data lines which are connected to a computer input port, and any change of state is indicated on a further data line.

The tone dialling signals generated by pressing the buttons on the telephones are detected by a standard circuit (module 14) designed to do this, and to provide identification of the button pressed by means of a binary coded decimal output on four lines, and a flag line. This circuit does not respond to normal or synthesised speech. The output of this module is also connected to a computer input port.

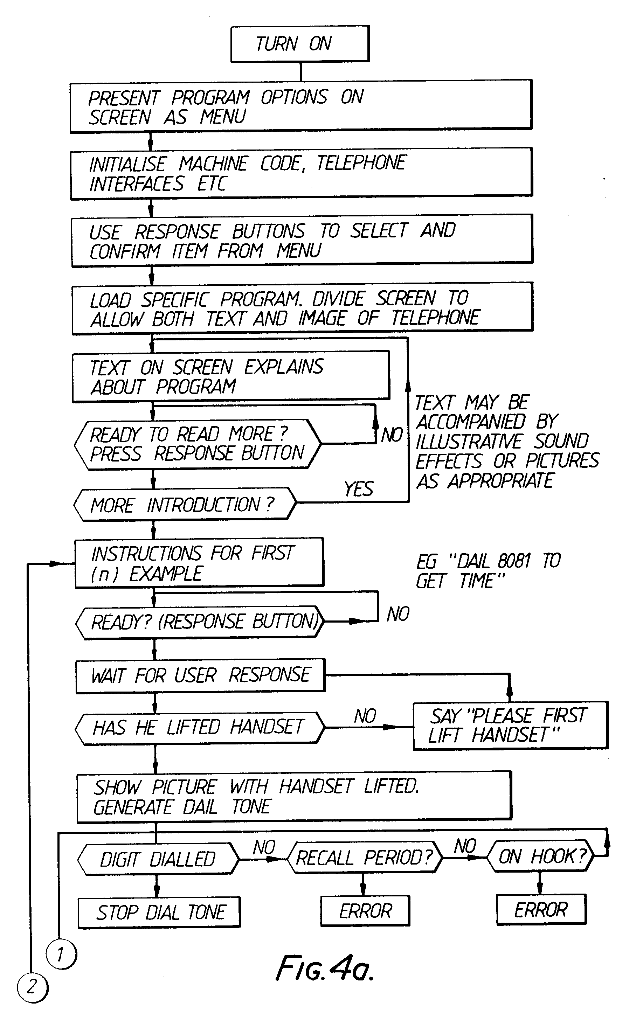

The system is operated by a program, the relationship between sections of the program being illustrated in Figure 3.

Section 21 comprises special purpose coding to sense the operation of the telephone units, by means of the signals sent from the interface module 13, 14. At all times the computer can detect whether the trainee has lifted or replaced a handset, or operated any button on the units.

Section 22 comprises special purpose coding to control the application of ringing voltage to a telephone, including control of the duration or "cadence" of the ringing, provided that the instrument is on-hook.

Section 23 comprises special purpose coding to control the connections of the speech paths within module 12 of the interface unit, and so to control whether two trainees using two instruments can hear each other via those instruments, and whether or not computer generated sounds will be passed to the telephone ear-pieces.

The above sections are closely interlinked, and may be written in a language which allows direct access to the computer interfaces concerned, even while other parts of the program are operating.

Section 24 comprises standard routines to allow the sensing of the state of the push-buttons on the response module 5, and to drive the speech and tone generators 3, 4.

Section 25 comprises a series of routines in a high-level language which provide for the drawing and redrawing of images and text on the screen as required. The text may consist of, for example, information or instructions for the trainee, indications of his progress in carrying out a sequence of operations, questions to which he must respond, or acknowledgements of his success or failure. The diagrams may consist of, for example, illustrations of the state of the telephone instruments, or indications of situations to which he can respond, and may be animated. There may also be included images and sequences of images from other sources, such as digitised graphic images, tape or video disc or slide stills or moving sequences.

Section 26 comprises a supervisory routine which provides options as to which tuition routines are to be used at a particular session, or for particular trainees, or to illustrate the facilities given by a particular class of service. This may store information, so that a trainee's record of practice can be used to determine the next exercise to be shown to him, or it may give a free choice. It is designed so that the trainee need not operate the computer keyboard, but enter all necessary choices by means of the response buttons 5, or via a telephone instrument 7a,7b.

Section 27 comprises the actual training programs. These are designed to train the subject by illustrating the operation of the telephones when connected to a particular exchange by simulating their behaviour, by requesting the trainee to carry out particular operations using the attached telephones, and by monitoring whether he does so correctly. If he makes a mistake, further information is usually given and he can try again. If successful he may be given reinforcing practice or further tests. He usually has the opportunity to repeat a section until he is confident. The program is paced by the trainee himself, and is written on the basis of one trainee, though it is often convenient for a small group to participate. There is no need for a human instructor to be present.

The details of this section depend on the precise objective of the training. It will differ, depending on what telephone exchange is being simulated, because there are significant differences in the modes of operation, and in the signals heard by the user. In addition each "facility" of the exchange requires to be illustrated, taught, and practised in appropriately different ways, requiring a range of training modules.

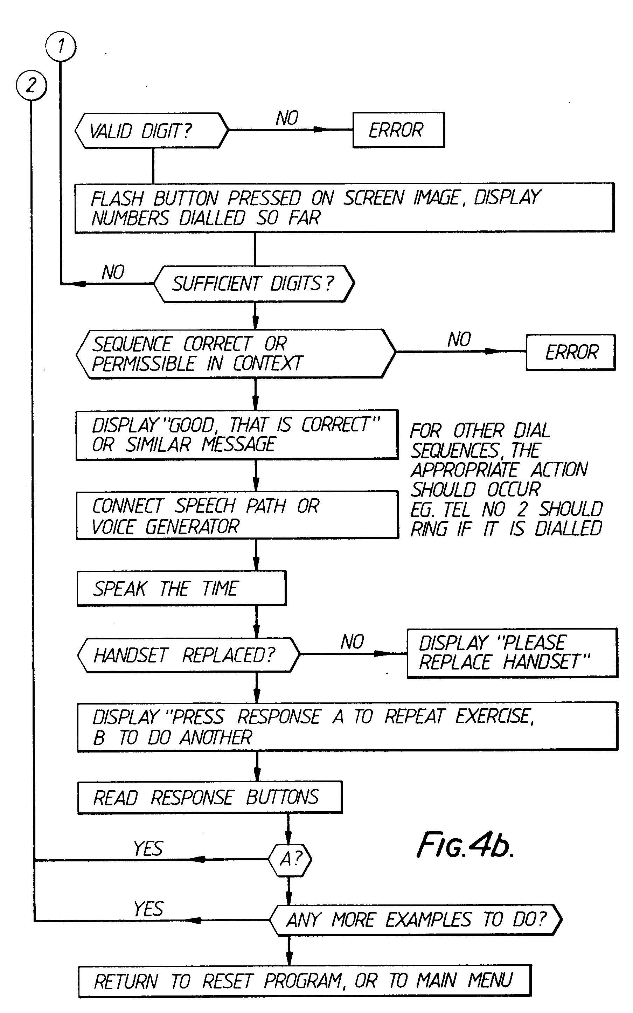

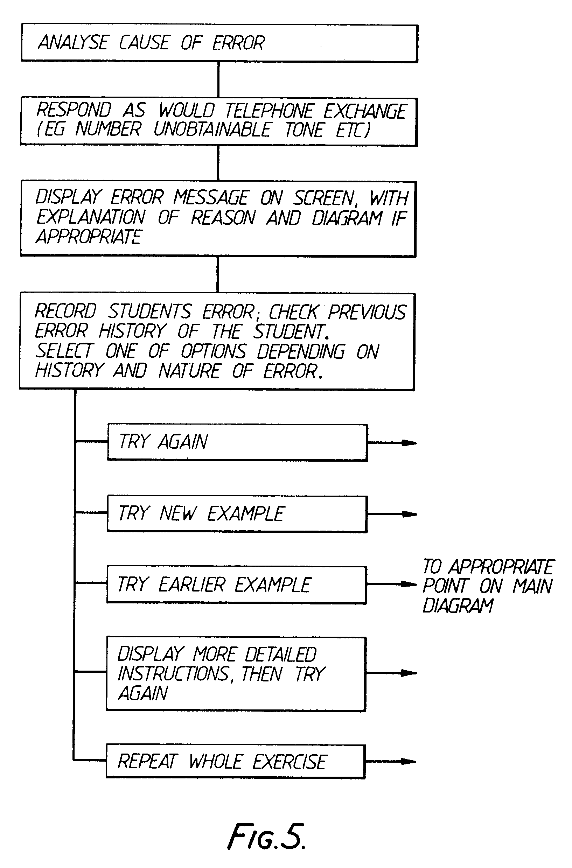

Figure 4, which is made up of Figures 4a and 4b, and Figure 5 self-explanatory are flow diagrams of a typical training program. This program shows generally how the features of the apparatus according to this invention may be used.

The whole system is designed to be easy to operate by a trainee who has no experience whatsoever of computers. There is no need to operate the computer keyboard, and all instructions are presented on the screen or by the speech synthesiser. The telephones appear to the trainee to behave as would standard telephones, when attached to the particular telephone exchange being simulated, except that there are no other real instruments attached, and any apparent connections to other systems are simulated by the computer system. The trainee can initiate a call and the computer will provide the appropriate aural response (e.g. for a call to a service which provides a recorded message giveing the time, it can give the time), with also if required, visual indication of call progress or response on the display screen; if a video image is available, the actions of the second party can be displayed. Similarly an incoming call can be initiated and illustrated by the computer.

The advantages of the present invention arise from the integration of actual telephones into the computer system by means of the interface board. The interface is under the control of the program which guides the trainee to use the telephones to practise his skills. Further advantages arise from the use of voice and tone synthesisers to provide appropriate responses to the trainee's actions, and an additional text and graphic display system to provide visual feedback to guide and correct him. Apparatus according to the present invention allows the use of the programming flexibility of the computer to provide suitable tuition for the particular type of exchange and class of user irrespective of his previous experience.

## Claims

1. An apparatus for training telephone users in the use of a telephone connected to a telephone system, the apparatus comprising:
a processor (1), provided with a stored training program;
interface means (6), for connection to a telephone (7a,7b) and to the processor; and
output means (2,3,4) for providing messages, supplied by the training program, to a user of the apparatus,
CHARACTERISED IN THAT the interface means comprises a socket, to which a conventional telephone may be connected,
IN THAT the output means comprises a speech synthesiser , connected to the processor and the interface means, for generating electrical signals under the control of the processor which can be converted to spoken messages by a telephone connected to the socket of the interface means, and
IN THAT the processor (1) is programmed such that, for training purposes, the apparatus can simulate operation of a telephone system, in that the user may operate a telephone (7a,7b), connected to the interface means (6), and receive from the apparatus via the output means responses corresponding to those which would be received from a telephone system, without requiring connection to such a system.

2. Apparatus as claimed in claim 1, wherein the processor (1) is a microcomputer.

3. Apparatus as claimed in claim 1 or 2, wherein the output means comprises:
a visual display unit (2), for providing visual messages to the user.

4. Apparatus as claimed in any preceding claim, wherein the output means further comprises:
a tone synthesiser (4), for imitating the audible signals provided by a telephone.

5. Apparatus as claimed in claim 4, wherein the output from the tone synthesiser or the speech voice synthesiser may be provided to the user either by means of the telephone operated by the user, or by means of a loudspeaker.

6. Apparatus as claimed in any preceding claim, wherein the apparatus also includes an input means (5), connected directly to the processor, allowing the user to respond to messages provided by the output means.

## Patentansprüche

1. Vorrichtung zum schulen von Telefonbenutzern im Gebrauch eines Telefons, das zu einem Telefonnetz gehört, umfassend:
einen Prozessor (1), der mit einem gespeicherten Ausbildungsprogramm ausgestattet ist;
Schnittstelleneinrichtung (6), geeignet zum Anschluß an ein Telefon (7a, 7b) und an den Prozessor; und
Ausgabeeinrichtungen (2, 3 und 4), dazu geeignet, einem Benutzer der Vorrichtung Meldungen des Ausbildungsprogramms zu übermitteln; dadurch gekennzeichnet,
daß die Schnittstelleneinrichtung eine Buchse enthält, an die ein herkömmliches Telefon angeschlossen werden kann,
daß die Ausgabeeinrichtung einen mit dem Prozessor und der Schnittstelleneinrichtung verbundenen Sprachgenerator enthält und prozessorgesteuert elektrische Signale erzeugt, die von einem an die Buchse der Schnittstelleneinrichtung angeschlossenen Telefon in gesprochene Meldungen umgesetzt werden können, und
daß der Prozessor (1) so programmiert ist, daß die Vorrichtung zu Ausbildungszwecken den Betrieb eines Telefonnetzes simulieren kann, wobei der Benutzer ein an eine Schnittstelleneinrichtung (6) angeschlossenes Telefon (7a, 7b) bedienen kann und von der Vorrichtung über die Ausgabeeinrichtung Antworten erhält, wie man sie in einem Telefonnetz erhielte, ohne daß der Anschluß an so ein Netz nötig ist.

2. Vorrichtung nach Anspruch 1, wobei der Prozessor (1) ein Mikrocomputer ist.

3. Vorrichtung nach Anspruch 1 oder 2, wobei die Ausgabeeinrichtung umfaßt: eine optische Anzeigeeinheit (2), dazu geeignet, den Benutzer mit optischen Meldungen zu versorgen.

4. Vorrichtung nach irgendeinem vorangehenden Anspruch, wobei die Ausgabeeinrichtung zudem einen Tongenerator (4) enthält, der die hörbaren Signale, die ein Telefon gibt, simulieren kann.

5. Vorrichtung nach Anspruch 4, wobei die Ausgaben des Tongenerators oder des Sprechstimmengenerators dem Benutzer entweder über das vom Benutzer bediente Telefon oder über einen Lautsprecher zugeführt werden.

6. Vorrichtung nach irgendeinem vorangehenden Anspruch, wobei die Vorrichtung auch direkt an den Prozessor angeschlossene Eingabeeinrichtungen (5) enthält, die es dem Benutzer gestatten, auf Meldungen der Ausgabeeinrichtung zu reagieren.

## Revendications

1. Dispositif pour apprendre à des utilisateurs de téléphones à utiliser un téléphone relié à un réseau téléphonique, le dispositif comprenant:
un processeur (1), comportant dans sa mémoire un programme d'apprentissage;
un moyen de connexion (6) pour établir une connexion avec un téléphone (7a,7b) et avec le processeur; et
un moyen de sortie (2,3,4) pour communiquer à un utilisateur de l'appareil des messages fournis par le programme d'apprentissage,
CARACTERISE EN CE QUE le moyen de connexion comporte une prise femelle sur laquelle peut être branché un téléphone classique,
EN CE QUE le moyen de sortie comporte un synthétiseur de parole, relié au processeur et au moyen de connexion, pour produire sous le contrôle du processeur des signaux électriques qui peuvent être convertis en messages oraux par un téléphone branché sur la prise femelle du moyen de connexion, et
EN CE QUE le processeur (1) est programmé de telle façon que, dans un but d'apprentissage, le dispositif puisse simuler le fonctionnement d'un réseau téléphonique, en ce que l'utilisateur peut utiliser un téléphone (7a,7b), relié au moyen de connexion (6), et recevoir du dispositif, par l'intermédiaire du moyen de sortie, des réponses correspondant à celles qui seraient reçues d'un réseau téléphonique, sans nécessiter le raccordement à un tel réseau.

2. Dispositif selon la revendication 1, dans lequel le processeur (1) est un micro-ordinateur.

3. Dispositif selon la revendication 1 ou 2, dans lequel le moyen de sortie comporte:
une unité de visualisation (2) pour fournir des messages visuels à l'utilisateur.

4. Dispositif selon l'une quelconque des revendications précédentes, dans lequel le moyen de sortie comporte en outre:
un synthétiseur (4) de tonalités pour imiter les signaux audibles produits par un téléphone.

5. Dispositif selon la revendication 4, dans lequel le signal de sortie du synthétiseur de tonalité ou du synthétiseur de parole peut être fourni à l'utilisateur soit à l'aide du téléphone utilisé par l'utilisateur, soit à l'aide d'un haut-parleur.

6. Dispositif selon l'une quelconque des revendications précédentes, dans lequel l'appareil comporte également un moyen d'entrée (5), directement relié au processeur, permettant à l'utilisateur de répondre aux messages fournis par le moyen de sortie.
